# EUROPEAN PATENT SPECIFICATION

(11) **EP 4 494 960 B1**
(45) Date of publication and mention of the grant of the patent: **04.03.2026**
(21) Application number: 23185836.6
(22) Date of filing: 17.07.2023
(51) Int. Cl.: B60W 30/14, B60W 30/165, B60W 50/00

(54) **CRUISE CONTROLLER**
GESCHWINDIGKEITSREGLER
RÉGULATEUR DE VITESSE

(43) Date of publication of application: 22.01.2025
(73) Proprietor: VOLVO TRUCK CORPORATION, 405 08 Göteborg (SE)
(72) Inventor: STJERNBERG, Oscar, GÖTEBORG (SE); WILHELMSSON, Martin, TORSLANDA (SE)
(74) Representative: Ström & Gulliksson AB

(56) References cited:
- SE-A1- 1 951 251
- US-A1- 2014 350 821
- US-A1- 2017 344 023
- US-B2- 10 935 127
- US-B2- 11 225 144

## Description

### TECHNICAL FIELD

The invention relates generally to cruise control. In particular aspects, the invention relates to a cruise controller configured for energy efficiency and reduced impact on a flow of traffic. The invention can be applied to heavy-duty vehicles, such as trucks, buses, and construction equipment, among other vehicle types. Although the invention may be described with respect to a particular vehicle, the invention is not restricted to any particular vehicle.

### BACKGROUND

Eco-driving, also known as green driving or fuel-efficient driving, is a concept that promotes driving techniques and habits aimed at reducing fuel consumption and environmental impact of vehicles while maintaining safe and comfortable driving conditions. Rapid acceleration and harsh braking lead to increased fuel consumption. Eco-driving encourages gradual acceleration and deceleration, allowing the vehicle to reach a steady speed more efficiently.

Different operators and vehicles implement eco-driving differently. Some operators limit a maximum speed of a vehicle while other operators may prefer a higher maximum speed, but accelerate more slowly to reach the maximum speed. The different implementations of eco-driving may negatively impact the flow of traffic increasing a need of acceleration and braking thereby increasing fuel consumption and causing irritation and/or frustration of fellow road users.

In US20140350821A1, a method for controlling a vehicle's speed based on rules and/or costs are described. The method involves predicting the vehicle's speed under different torque levels and determining a reference value to regulate speed based on comparing the predictions to speed limits or evaluating costs. The goal is to minimize fuel use while keeping processor load constant. In US20170344023A1 methods for controlling vehicles in a platoon are described. Sensors and communication systems are used to coordinate vehicles and control speed and braking. Safety features like driver alerts and monitoring of conditions are included.

### SUMMARY

According to a first aspect of the invention, a computer system comprising processing circuitry is presented. The processing circuitry is configured to evaluate, based on topography data of an upcoming road segment, use of upcoming topography to achieve a target speed range of a vehicle operating in a topography fuel efficiency mode. The processing circuitry is further configured to determine all trailing vehicles within a predetermined range are operating in a propulsion mode corresponding to the topography fuel efficiency mode and responsive to determining that all trailing vehicles within the predetermined range are operating in the propulsion mode corresponding to the topography fuel efficiency mode, permit a current speed of the vehicle to temporarily deviate below the target speed range of the vehicle and to use the upcoming topography to achieve the target speed range. The first aspect of the invention may seek to allow fuel efficient propelling of a vehicle without hampering a flow of traffic. A technical benefit may include that fuel efficient driving is enabled without fellow road users being adversely affected.

Optionally in some examples, including in at least one preferred example, the target speed range of the vehicle comprises a speed limit of a current road segment. A technical benefit may include that the speed of the vehicle may be adapted to the speed limit, and acceleration to an increased speed limit may be provided in a fuel efficient manner by utilizing upcoming topology.

Optionally in some examples, including in at least one preferred example, the processing circuitry is further configured to permit the current speed of the vehicle to deviate below the target speed range of the vehicle by a configurable speed deviation. A technical benefit may include allowing the speed of the vehicle to be reduced sufficiently to ensure tradeoffs between fuel efficient propelling of the vehicle and disturbances to a flow of traffic.

Optionally in some examples, including in at least one preferred example, the processing circuitry is further configured to, responsive to the topography data indicating a change in slope of the upcoming road segment, configure the configurable speed deviation based on a travel time estimate for the vehicle to reach the road segment associated with the change in slope indicated by the topography data. A technical benefit may include allowing the speed of the vehicle to be reduced sufficiently to ensure tradeoffs between fuel efficient propelling of the vehicle and disturbances to a flow of traffic.

Optionally in some examples, including in at least one preferred example, the processing circuitry is further configured to configure the configurable speed deviation based on a geographical location of the vehicle. A technical benefit may include adapting the configurable speed deviation to local driving customs and patterns.

Optionally in some examples, including in at least one preferred example, the processing circuitry is further configured to configure the configurable speed deviation based on additional vehicle data, additional trailing vehicle data and/or environment data. A technical benefit may include saving further energy and further reducing an impact of fellow road users.

Optionally in some examples, including in at least one preferred example, the predetermined range is a time gap or a distance. A technical benefit may include allowing trailing vehicles to be accurately identified.

Optionally in some examples, including in at least one preferred example, the processing circuitry is configured to, for each of the trailing vehicles, request the propulsion mode of the trailing vehicle, and responsive to the associated request timing out, determine that the trailing vehicle is not operating in a mode corresponding to the topography fuel efficiency mode. A technical benefit may include accurately determining a propulsion mode of the trailing vehicles.

Optionally in some examples, including in at least one preferred example, the request the propulsion mode is provided across a vehicle-to-vehicle communications interface. A technical benefit may include providing communication across a readily available and cost-effective interface.

Optionally in some examples, including in at least one preferred example, the processing circuitry is configured to, obtain speed limit data of the current road segment, and configure the configurable speed deviation based on the speed limit data. A technical benefit may include saving further energy and further reducing an impact of fellow road users.

Optionally in some examples, including in at least one preferred example, the target speed range of the vehicle is a range comprising a speed limit of a current road segment; the processing circuitry is further configured to: permit the current speed of the vehicle to deviate below the target speed range of the vehicle by a configurable speed deviation; the processing circuitry is further configured to: responsive to the topography data indicating a change in slope of the upcoming road segment, configure the configurable speed deviation based on an estimate a travel time for the vehicle to reach the road segment associated with the change in slope indicated by the topography data; the processing circuitry is further configured to: configure the configurable speed deviation based on a geographical location of the vehicle; the processing circuitry is further configured to: configure the configurable speed deviation based on additional vehicle data, additional trailing vehicle data and/or environment data; the predetermined range is a time gap or a distance; the processing circuitry is configured to, for each of the trailing vehicles: request the propulsion mode of the trailing vehicle, and responsive to the associated request timing out, determine that the trailing vehicle is not operating in a mode corresponding to the topography fuel efficiency mode; the request for the propulsion mode is provided across a vehicle-to-vehicle communications interface; the vehicle-to-vehicle communications interface is a direct interface between at least the vehicle and one of the one or more trailing vehicles or the vehicle-to-vehicle communications interface is a cloud interface; and the processing circuitry is further configured to: obtain speed limit data of the current road segment; and configure the configurable speed deviation based on the speed limit data. A technical benefit may include allowing trailing vehicles to be accurately identified and their propulsion mode accurately determined. A technical benefit may include allowing the speed of the vehicle to be reduced sufficiently to ensure tradeoffs between fuel efficient propelling of the vehicle and disturbances to a flow of traffic. A technical benefit may include that the speed of the vehicle may be adapted to the speed limit, and acceleration to an increased speed limit may be provided in a fuel efficient manner by utilizing upcoming topology.

According to a second aspect of the invention, a vehicle comprising the computer system of the first aspect is presented. The second aspect of the invention may seek to allow fuel efficient propelling of a vehicle without hampering a flow of traffic. A technical benefit may include that fuel efficient driving is enabled without fellow road users being adversely affected.

According to a third aspect of the invention, a computer-implemented method is presented. The computer implemented method comprises evaluating, by a processing circuitry of a computer system, based on topography data of an upcoming road segment, use of upcoming topography to achieve a target speed range of a vehicle operating in a topography fuel efficiency mode. The computer implemented method further comprises, determining all trailing vehicles within a predetermined range are operating in a propulsion mode corresponding to the topography fuel efficiency mode and responsive to determining that all trailing vehicles within the predetermined range are operating in a propulsion mode corresponding to the topography fuel efficiency mode, permitting, by the processing circuitry of the computer system, a current speed of the vehicle to temporarily deviate below the target speed range of the vehicle and to use the upcoming topography to achieve the target speed range. The third aspect of the invention may seek to allow fuel efficient propelling of a vehicle without hampering a flow of traffic. A technical benefit may include that fuel efficient driving is enabled without fellow road users being adversely affected.

According to a fourth aspect of the invention, a computer program product comprising program code for performing, when executed by the processing circuitry, the method of the second aspect. The fourth aspect of the invention may seek to allow fuel efficient propelling of a vehicle without hampering a flow of traffic. A technical benefit may include that fuel efficient driving is enabled without fellow road users being adversely affected.

According to a fifth aspect of the invention, a non-transitory computer-readable storage medium comprising instructions, which when executed by the processing circuitry, cause the processing circuitry to perform the method of the second aspect. The fifth aspect of the invention may seek to allow fuel efficient propelling of a vehicle without hampering a flow of traffic. A technical benefit may include that fuel efficient driving is enabled without fellow road users being adversely affected.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the invention as described herein.

There are also disclosed herein computer devices, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1A** is an exemplary side view of a vehicle according to an example.
**FIG. 1B** is an exemplary block diagram of a vehicle according to an example.
**FIG. 2** is an exemplary flow chart of a computer system according to an example.
**FIG. 3A** is an exemplary software architecture according to an example.
**FIG. 3B** is an exemplary flowchart according to an example.
**FIG. 4** is an exemplary graph view of a speed manager according to an example.
**FIG. 5** is an exemplary graph view of a speed manager according to an example.
**FIG. 6** is an exemplary graph view of a speed manager according to an example.
**FIG. 7** is an exemplary block diagram of a method according to an example.
**FIG. 8** is an exemplary view of a computer program product according to an example.
**FIG. 9** is a schematic diagram of an exemplary computer device for implementing examples disclosed herein, according to an example.

### DETAILED DESCRIPTION

The detailed description set forth below provides information and examples of the disclosed technology with sufficient detail to enable those skilled in the art to practice the disclosure.

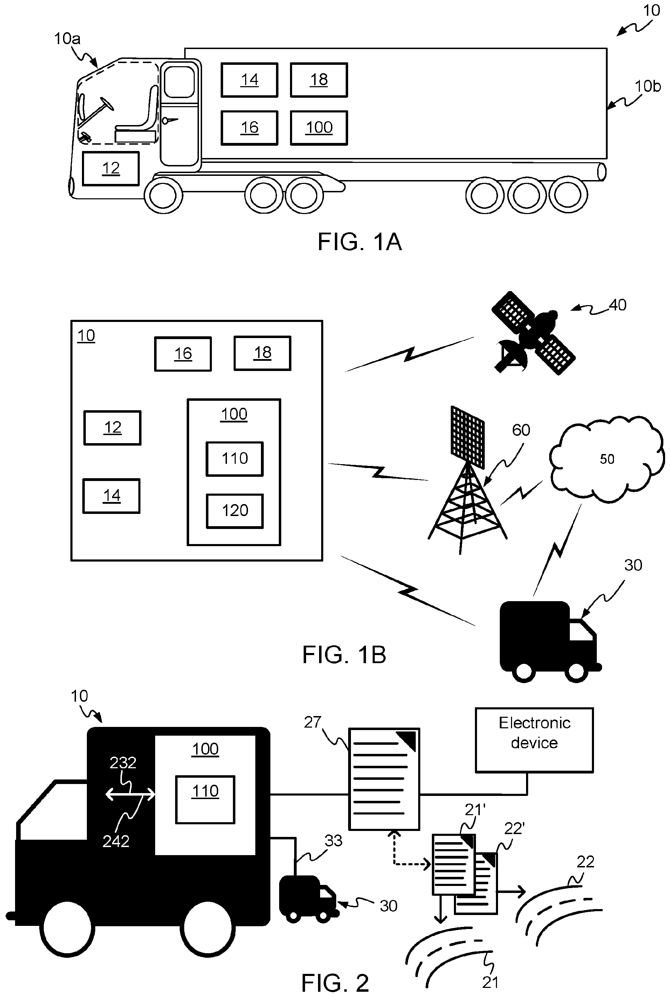

**FIG. 1A** is an exemplary schematic side view of a heavy-duty vehicle **10** (hereinafter referred to as vehicle **10).** The vehicle **10** comprises a tractor unit **10a** which is arranged to tow a trailer unit **10b.** In other examples, other vehicles may be employed, e.g., trucks, buses, and construction equipment. The vehicle **10** comprises all vehicle units and associated functionality to operate as expected, such as a powertrain, chassis, and various control systems. The vehicle **10** comprises one or more propulsion sources **12.** The propulsion source **12** may be any suitable propulsion source **12** exemplified by, but not limited to, one or more or a combination of an electrical motor, a combustion engine such as a diesel, gas or gasoline powered engine. The vehicle **10** further comprises an energy source **14** suitable for providing energy for the propulsion source **12.** That is to say, if the propulsion source **12** is an electrical motor, a suitable energy source **14** would be a battery or a fuel cell. The vehicle **10** further comprises sensor circuitry **16** arranged to detect, measure, sense or otherwise obtain data relevant for operation of the vehicle **10.** The sensor circuit **16** may comprise one or more of an accelerometer, a gyroscope, a wheel Speed Sensor, an ABS sensor, a throttle position sensor, a fuel level sensor, a temperature Sensor, a pressure sensor, a rain sensor, a light sensor, proximity sensor, a lane departure warning sensor, a blind spot detection sensor, a TPMS sensor etc. The data relevant for operation of the vehicle **10** may include, but is not limited to, one or more of a speed of the vehicle **10,** a weight of the vehicle **10,** an inclination of the vehicle **10,** a status of the energy source **14** of the vehicle **10** (state of charge, fuel level etc.), a presence of road users in a vicinity of the vehicle **10,** a current speed limit of a current road travelled by the vehicle **10,** etc. The vehicle **10** further comprises communications circuitry **18** configured to receive and/or send communication. The vehicle **10** further comprises a computer system **100,** the computer system **100** will be further explained in following sections.

**FIG. 1B** is a block view of the vehicle **10.** In **FIG. 1B****.** The vehicle **10** may be in operative communication with external devices, such as one or more trailing vehicles **30.** The connection may be provided by e.g. the communications circuitry **18.** The term trailing vehicles **30** is to mean a vehicle traveling behind (along a same road) the vehicle **10** within a predetermined range. The vehicle **10** may be in communication with the trailing vehicle **30** directly or via a cloud (backend) server **50.** The vehicle **10** may communicate with the cloud server **50** directly or via a communications interface such as a cellular communications interface **60,** such as a radio base station. The cloud server **50** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. Communication with the trailing vehicles **30** may be provided by any suitable vehicle-to-vehicle (V2V) communications protocol exemplified by, but not limited to Dedicated Short-Range Communications (DSRC), Cellular Vehicle-to-Everything (C-V2X), IEEE 802.11p, LTE-V (LTE-V2X), 5G NR (New Radio) V2X, etc. The vehicle **10** may further be operatively connected to a Global Navigation Satellite System (GNSS) **40** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **10** may be configured to utilize data obtain from the GNSS **40** to determine a geographical location of the vehicle **10.**

The computer system **100** of the vehicle **10** is may be operatively connected to the communications circuitry **18,** the sensor circuitry **16,** the energy source **14** and/or the propulsion source **12** of the vehicle **10.** The computer system **100** comprises processing circuitry **110.** The computer system **100** may comprise a storage device **120,** advantageously a non-volatile storage device such as a hard disk drives (HDDs), solid-state drives (SSDs) etc. In some examples, the storage device **120** is operatively connected to the computer system **100.**

By keeping track of a driving configuration of trailing vehicles **30,** eco-driving may be utilized more freely without hampering a flow of traffic or risking causing accidents. To exemplify, if a vehicle is propelled in an eco-friendly mode, the topology of the road may be taken into account when planning acceleration and deceleration (braking). It may be preferred to postpone an acceleration event in anticipation of a downhill segment of the road as gravity will assist in accelerating the vehicle **10.** Consequently, increasing a speed of a vehicle **10** by a specific amount will consume less of the energy source **14** of the vehicle **10** if the acceleration is performed at a downhill sloping road segment compared to if the acceleration was performed at a flat or uphill segment of the road. However, assume an uphill road segment and that a speed limit of the road increases a distance before a crest of the uphill road segment. The eco-friendly way of propelling the vehicle **10** would be to wait with acceleration of the vehicle **10** to the higher speed limit until the crest is reached. This type of operation of the vehicle **10** will be referenced to as topology based operation. However, this would force any vehicle **10** following the present vehicle **10** to either also wait with acceleration, or overtake the present vehicle **10.** In order to avoid such issues, the vehicle **10** is selectively operated in the topology based eco-friendly way based, not only on a presence of any trailing vehicles **30,** but on a current mode of operation of the trailing vehicles **30.** If a trailing vehicle **30** also operates in a topology based mode of operation, the vehicle 10 may wait to accelerate until the topology of the road presents a more energy efficient slope (or lack of slope) for accelerating.

Topology based operation may be performed by a cruise control circuitry of a vehicle **10** or by an operator of a vehicle (remote or local). Regardless of where, by whom, or by what topology based operation of a vehicle **10** is performed, the vehicle **10** is operating in a topography fuel efficiency mode, discussed in more detail below. The topography fuel efficiency mode generally permits the vehicle **10** to deviate from a target speed, or target speed range, of the vehicle **10.** The deviation may be either positive, negative or both positive and negative such that a range encompassing the target speed or target speed range is formed. The topography fuel efficiency mode permits the current speed of the vehicle **10** to at least deviate below the target speed. The target speed range may be a range defined by an upper speed limit and lower speed limit. Generally, a cruise controller is implemented to operate a target speed range to avoid unnecessary braking and acceleration of the vehicle 10 due to e.g. minor shift in a slope of the road, gusts of wind etc. The upper speed limit of the target speed range may be defined as a fixed deviation from the target speed or a deviation by a fraction of the target speed. The lower speed limit of the target speed range may be defined as a fixed deviation from the target speed or deviation by a fraction of the target speed. The deviation from the target speed range may scale with the target speed, such that lower target speeds have a tighter target speed range compared to higher target speeds.

With reference to **FIG. 2****,** the computer system **100** and associated functionality and features will be discussed in some further detail. The computer system **100** may be configured to obtain topography data **27** associated with an identifier **21', 22'** of an upcoming road segment **21, 22.** The topography data **27** may be obtained, as shown in **FIG. 2****,** from an electronic device. The electronic device may be the cloud server **50** or a local storage of the vehicle **10,** such as the previously presented storage device **120** of the computer system **100.** The topography data **27** may be any suitable information concerning physical features and characteristics of the Earth's surface. The topography data **27** may comprise details such as, but not limited to, elevation, slope, terrain, landforms, and/or other spatial attributes. The topography data **27** may be exemplified by, but not limited to, Digital Elevation Models (DEMs), contour lines, slope and aspect maps etc. The topography data **27** may be produced by e.g. government agencies, research institutions, and/or commercial providers.

The computer system **100** is may further be configured to evaluate the topography data **27** to see if there is an opportunity to operate the vehicle **10** in the topography fuel efficiency mode, i.e. to wait with acceleration of the vehicle **10** until the upcoming road segment **21, 22** is reached. However, the computer system **100** may only permit operation in the topography fuel efficiency mode if doing so will not adversely affect the flow of following traffic. To this, end, if there are no trailing vehicles **30,** the vehicle **10** may freely operate at the topography fuel efficiency mode and permit a speed **242** of the vehicle **10** to temporarily deviate below a target speed range **232** of the vehicle **10** and to use the upcoming topography to achieve the target speed range **232.** Target speed range **232** is generally a target speed with tolerable deviation. This deviation may be a percentage deviation based of the target speed. Generally, an upper limit of the target speed range **232** is closer to the target speed than a lower limit of the target speed range **232,** i.e. there is more headroom for deviation below the target speed than above the target speed. However, if there are trailing vehicles **30** and all these are also operating in the topography fuel efficiency mode, or a propulsion mode **33** corresponding to the topography fuel efficiency mode, the trailing vehicles **30** may be ignored and the computer system **10** may be configured to permit the speed **242** of the vehicle **10** to temporarily deviate below the target speed range **232** of the vehicle **10** and to use the upcoming topography to achieve the target speed **232.** If one or more of the trailing vehicles **30** are not operating the topography fuel efficiency mode, or a propulsion mode **33** corresponding to the topography fuel efficiency mode, or if the vehicle **10** has not received a response from each target trailing vehicle, the computer system **100** may be configured to prevent the speed **242** of the vehicle **10** to deviate below the target speed range **232** of the vehicle **10.**

To this end, the computer system **100** may be configured to obtain a propulsion mode **33** of the trailing vehicles **30** to determine if the trailing vehicles **30** are operating in the topography fuel efficiency mode, or a propulsion mode **33** corresponding to the topography fuel efficiency mode. The propulsion mode **33** may be obtained from the trailing vehicles **30** across a suitable V2V interface as previously mentioned. Alternatively, or additionally, the propulsion mode **33** of the trailing vehicles **30** may be obtained from, or provided by the cloud server **50** across any suitably communications interface such as the previously exemplified wireless interfaces.

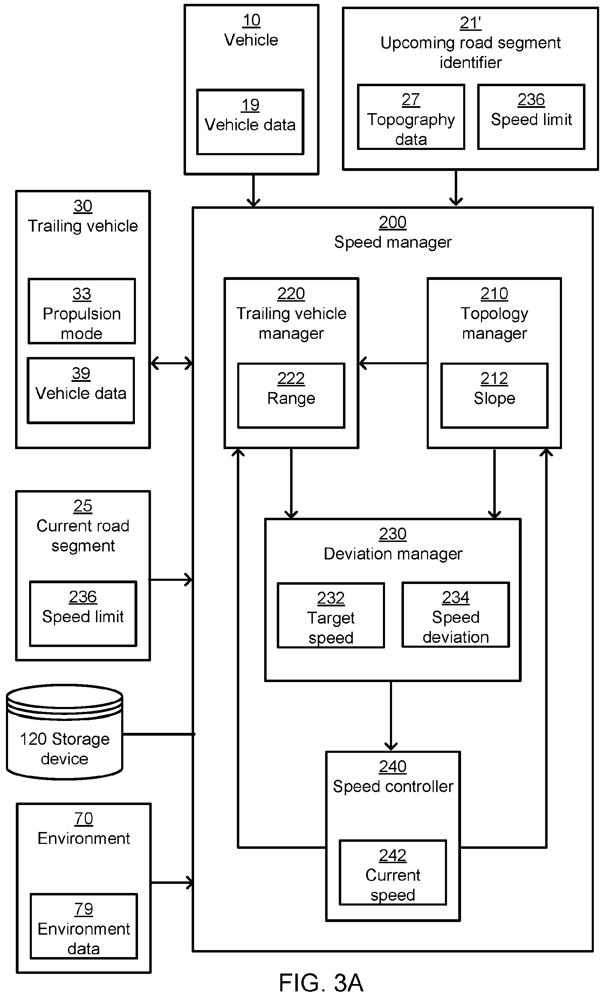

With reference to **FIG. 3A****,** an architectural example of how a speed manager **200** may be implemented. The functions and features described with reference to the speed manager **200** are implemented and provided by the computer system **100** presented herein. The speed manager **200** may comprise a topology manager **210,** a trailing vehicle manager **220,** a deviation manager **230,** and a speed controller **240.**

The topology manager **210** determines whether using upcoming topography to achieve a target speed range **232** is fuel efficient. This may be achieved in numerous different ways and the following is provided as examples and should not be considered exhaustive. In some examples, the topology manager **210** may be configured to obtain topography data **27** of an upcoming road segment **21** identified by an upcoming road segment identifier **21'**. The topography data **27** may be any suitable topography data **27,** such as the topography data exemplified herein. The topography data **27** may be obtained from a storage device **120** operatively connected to the speed manager **200** or from the cloud server **50.** The topography manager **210** may be configured to determine a geographical location of the vehicle **10** by e.g. data obtained from the GNSS **40** as exemplified herein. The topography manager **210** may be configured to determine a slope **212** of the upcoming road segment **21** based on the topography data **27.** The topography manager **210** may be configured to determine that using the upcoming topography is fuel efficient to achieve a target speed range **232** responsive to the topography data **27** of the upcoming road segment **21** indicating that a downhill segment is approaching. A downhill segment may be indicated by a negative slope **212.** In some examples, the topography manager **210** may be configured to determine that using the upcoming topography is fuel efficient to achieve a target speed range **232** responsive to the topography data **27** of the upcoming road segment **21** indicating a segment with a less steep uphill slope **212** compared to a current road segment. The topography manager **210** may further be configured to determine a distance and/or travel time to the downhill (or flat, or less steep uphill) segment. To this end, the topography manager **210** may be configured to obtain a current speed **242** of the vehicle **10,** such as from the speed controller **240.** The topography manager **210** may further be configured to determine a distance and/or travel time to a change in slope **212.**

In some examples, the topography manager **210** may be configured to determine that maintain a target speed range **232** at the upcoming topography is fuel inefficient. This may be the case when a steep uphill segment is followed by flat or downhill segments. An uphill segment may be indicated by a positive slope **212.** The topography manager **210** may further be configured to determine a distance and/or travel time to the uphill segment.

The trailing vehicle manager **220** determines whether all trailing vehicles **30** are operating in a propulsion mode **33** corresponding to the topography fuel efficiency mode. This may be achieved in numerous different ways and the following is provided as examples and should not be considered exhaustive. In some examples, the trailing vehicle manager **220** is configured to determine a presence of any trailing vehicles **30** within a predetermined range **222.** The predetermined range **222** may be a preconfigured range, a range determined based on a current speed **242** of the vehicle **10,** a range determined based on a following vehicle distance, following vehicle speed, host vehicle speed, host vehicle distance to the change in slope, and/or travel time to the change in slope **212,** or a combination of these. The trailing vehicle manager **220** may be configured to determine presence of trailing vehicles **30** within the predetermined range **222** by any suitable technology. In some examples, the trailing vehicle manager **220** may be configured to determine presence of trailing vehicles **30** within the predetermined range **222** by utilization of data from e.g. the sensor circuitry **16,** such as e.g. camera circuitry, radar circuitry etc. Additionally, or alternatively, the trailing vehicle manager **220** may be configured to determine presence of trailing vehicles **30** within the predetermined range **222** by utilization of data from e.g. the cloud server **50** by providing a current geographical location of the vehicle **10** to the cloud server **50,** optionally together with the predetermined range **222,** and obtaining data indicating at least presence or absence or trailing vehicles **30.** The predetermined range **222** may be extended if a distance between trailing vehicles **30** is below a predetermined threshold (which may be determined based on the same basis as the predetermined range **222).** This is advantageous in situations where a line of trailing vehicles **30** extend beyond the initially predetermined range **222.**

If the trailing vehicle manager **220** determines a presence of trailing vehicles **30,** the trailing vehicle manager **220** may obtain a propulsion mode **33** of each of the trailing vehicles **30.** The propulsion mode **33** of the trailing vehicles **30** may be obtained in numerous different ways and the following is provided as examples and should not be considered exhaustive. In some examples, the trailing vehicle manager **220** may be configured to request each of the trailing vehicles **30** to provide a propulsion mode **33.** The request may be provided across any suitable interface such as the exemplified V2V interfaces. In some examples, the request is provided to a first trailing vehicle **30** closest behind the vehicle **10,** and the first trailing vehicle relays the request to a second trailing vehicle immediately behind the first trailing vehicle and so on until no further trailing vehicles remain within the (extended) predetermined range **222.** The response from the trailing vehicles **30** may be sent across the same interface as the request, but in an opposite direction. Alternatively, the response may be sent across a different interface from the request, or obtained from e.g. the cloud server **50.** If data is obtained indicative of all trailing vehicles **30** operating in a propulsion mode **33** corresponding to the topography fuel efficiency mode, the trailing vehicle manager **220** may determine that all trailing vehicles **30** are operating in the topography fuel efficiency mode. The trailing vehicle manager **220** may be configured to determine that not all vehicles are operating in the topography fuel efficiency mode responsive to at least one trailing vehicle **30** within the predetermined range **222** indicating a propulsion mode **33** that does not correspond to the topography fuel efficiency mode. Additionally, or alternatively, the trailing vehicle manager **220** may be configured to determine that not all trailing vehicles **30** within the predetermined range **222** are operating in the topography fuel efficiency mode responsive to at least one trailing vehicle **30** within the predetermined range **222** failing to provide a response to the request for propulsion mode **33.** In other words, if the request times out, it is assumed that the associated trailing vehicle **30** is not operating in the topography fuel efficiency mode.

The deviation manager **230** may be configured to determine if the current speed **242** of the vehicle **10** is permitted to temporarily deviate below the target speed range **232** of the vehicle **10.** This may be achieved in numerous different ways and the following is provided as examples and should not be considered exhaustive. In some examples, the deviation manager **230** may be configured to permit the current speed **242** of the vehicle **10** to temporarily deviate below the target speed range **232** of the vehicle **10** responsive to the trailing vehicle manager **220** determining that all trailing vehicles **30** within the predetermined range **222** are operating in the topography fuel efficiency mode. The target speed range **232** may comprise a speed limit **236** of a current road segment **25,** i.e. a current speed limit **236.** In some examples, the deviation manager **230** may be configured to permit the current speed **242** of the vehicle **10** to temporarily deviate below the target speed range **232** of the vehicle **10** by a configurable speed deviation **234.** The configurable speed deviation **234** may be configured based on an estimated travel time for the vehicle **10** to reach an upcoming change in slope **212.** Additionally, or alternatively, the configurable speed deviation **234** may be configured based on a slope of the current road segment **25.** In some examples, the configurable speed deviation **234** may be configured based on a geographical location of the vehicle **10.** That is to say, in some countries, regions or locations, operators and fellow road users may be more inclined to accept larger deviations in vehicle speed than in other regions. Additionally, or alternatively, the configurable speed deviation **234** may be configured based on vehicle data **19.** Vehicle data **19** may be any suitable parameters indicating operational data of the vehicle **10.** The vehicle data **19** may be exemplified by, but is not limited to, a weight of the vehicle, a current driving mode of the vehicle **10** (e.g. level of eco-driving etc.), a status of the energy source **14** etc. Additionally, or alternatively, the configurable speed deviation **234** may be configured based on trailing vehicle data **39.** The trailing vehicle data **39** may be exemplified by, but is not limited to, a weight of the trailing vehicle **30,** a current driving mode of the trailing vehicle **30** (e.g. level of eco-driving etc.), a status of an energy source of the trailing vehicle **30** etc. The trailing vehicle data **39** may be obtained correspondingly to the propulsion mode **33** of the trailing vehicle **30.** Additionally, or alternatively, the configurable speed deviation **234** may be configured based on environment data **79.** The environment data **79** may be any data associated with an environment **70** of the vehicle **10.** The environment data **79** may be exemplified by, but is not limited to, traffic conditions, weather data etc. For instance, a strong head wind may lead to an increased configurable speed deviation **234,** a risk of icy roads may lead to a decreased configurable speed deviation **234** etc.

The deviation manager **230** may be configured to reset the configurable speed deviation **234** to zero, or disable the configurable speed deviation **234** responsive to the slope **212** no longer indicating that there is an opportunity or need to accelerate the vehicle **10** by assistance of a slope **212** of an upcoming road segment **21.**

The speed controller **240** may be configured to control the current speed **242** of the vehicle **10,** such as within the target speed range **232.** If the current speed **242** of the vehicle **10** is permitted to temporarily deviate below the target speed range **232,** the speed controller **240** may control the current speed of the vehicle **10** to deviate below the target speed range **232.** In some examples, if the current speed **242** of the vehicle **10** is permitted to temporarily deviate below the target speed range **232,** the speed controller **240** may control the current speed **242** of the vehicle **10** to deviate below the target speed range **232** by the configurable speed deviation **234.** It should be mentioned that the speed controller may control mainly positive acceleration in scenarios when the current speed **242** of the vehicle **10** is permitted to temporarily deviate below the target speed range **232.** In other words, in the topology based fuel efficiency mode (the topography fuel efficiency mode) of operation, the speed controller **240** will generally not (regeneratively) brake the vehicle **10** to reach the lowest speed permitted or reduce the speed of the vehicle **10.**

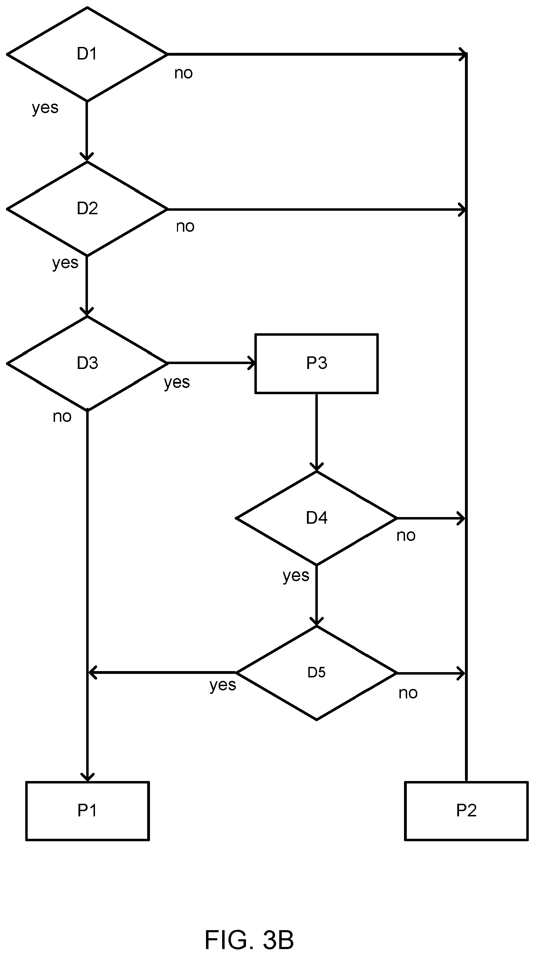

In **FIG. 3B****,** an exemplary flow-chart describing some logical steps of the when to permit operation in the topography fuel efficiency mode, and when to prevent operation in the topography fuel efficiency mode. A first decision point **D1** determines if a request for operating in the topography based fuel efficiency mode is received. If the first decision point **D1** determines that no request for operating in the topography based fuel efficiency mode is received, the second process **P2** is entered (the path marked with "no" in from the first decision point **D1** in **FIG. 3B****).** The second process **P2** prevents operation of the vehicle **10** in the topography fuel efficiency mode. If the first decision point **D1** determines that a request for operating in the topography based fuel efficiency mode is received, a second decision point **D2** is reached (the path marked with "yes" from the first decision point **D1** in **FIG. 3B****).** The second decision point **D2** determines if operation in the topography based fuel efficiency mode is beneficial. The determination of whether operation in the topography based fuel efficiency mode is beneficial or not may be based on e.g. topology of upcoming road segments **21, 22,** a change in speed limit **236** or any other feature, function or example presenter herein. If the second decision point **D2** determines that operation in the topography based fuel efficiency mode is not beneficial, the second process **P2** is entered (the path marked with "no" in from the first decision point **D2** in **FIG. 3B****).** If the second decision point **D2** determines that it is beneficial to operate in the topography based fuel efficiency mode, a third decision point **D3** is reached (the path marked with "yes" from the second decision point **D2** in **FIG. 3B****).** The third decision point **D3** determines presence of any trailing vehicles **30** within the predetermined range **222.** Presence of trailing vehicles **30** may be determined in accordance with any example, function or feature presented herein. If the third decision point **D3** determines that no trailing vehicles **30** are present within the predetermined range **222,** a first process **P1** is entered (the path marked with "no" from the third decision point **D3** in **FIG. 3B****).** At the first process **P1,** the vehicle **10** is operated in the topography fuel efficiency mode as described herein. If the third decision point **D3** determines that trailing vehicles **30** are present within the predetermined range **222,** a third process **P3** is entered (the path marked with "yes" from the third decision point **D3** in **FIG. 3B****).** At the third process **P3,** requests are sent for propulsion modes **33** of the trailing vehicles **30.** This may be performed as exemplified by any feature, function or device presented herein. After sending the request, a fourth decision point **D4** is reached. The fourth decision point **D4** determines if responses to the request are received from all trailing vehicles **30.** If the fourth decision point determines that responses have not been received from all trailing vehicles **30** within the predetermined range **222,** the second process **P2** is entered (the path marked with "no" from the fourth decision point **D4** in **FIG. 3B****).** Determining that responses have not been received from all trailing vehicles **30** within the predetermined range **222** may be based on the request timing out. If the fourth decision point determines that responses have been received from all trailing vehicles **30** within the predetermined range **222,** a fifth decision point **D5** is reached (the path marked with "yes" from the fourth decision point **D4** in **FIG. 3B****).** The fifth decision point **D5** determines if all responses indicate that the propulsion modes **33** of the trailing vehicles **30** within the predetermined range **222** are all corresponding to the topography fuel efficiency mode. If the fifth decision point **D5** determines that at least one response indicates a propulsion modes **33** that does not correspond to the topography fuel efficiency mode, the second process **P2** is entered (the path marked with "no" from the fifth decision point **D5** in **FIG. 3B****).** If the fifth decision point **D5** determines that all responses indicate propulsion modes **33** corresponding to the topography fuel efficiency mode, the first process **P1** in entered (the path marked with "yes" from the fifth decision point **D5** in **FIG. 3B****).**

The order of some of the decision points and processes presented in reference to FIG. 3B may be changed. To exemplify, the first decision point **D1,** the second decision point **D2** and/or the third decision point **D3** may be arranged anywhere upstream from the first process **P1.**

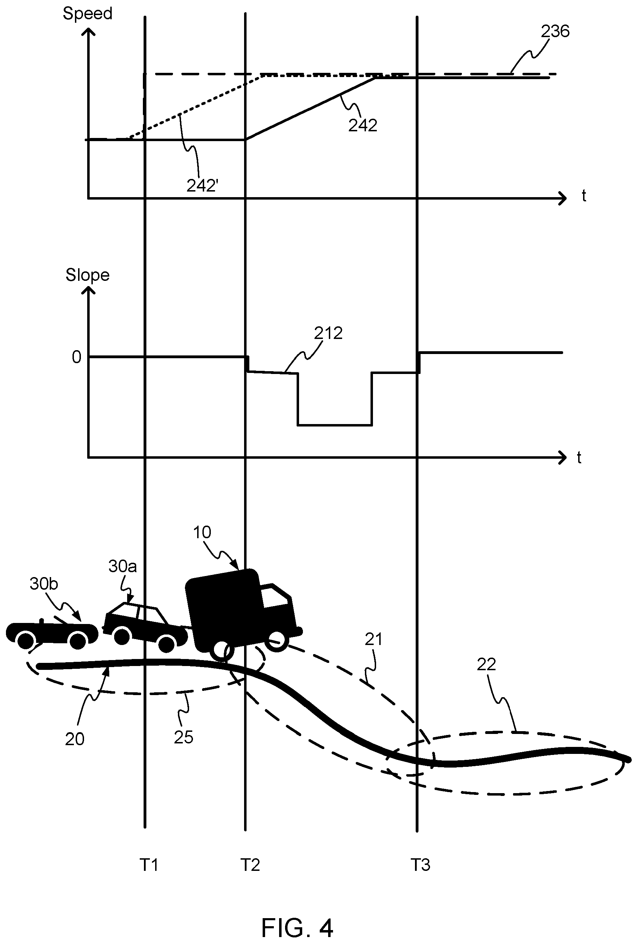

With reference to **FIG. 4****,** a specific example of how the features of the present disclosure may be utilized will be explained. In **FIG. 4** a vehicle **10** is traveling along a road **20.** The top graph in **FIG. 4** shows a speed **242** of the vehicle **10** versus time and the middle graph shows a slope **212** of the road **20.** The bottom graph schematically shows the vehicle **10** traveling along the road **20** and an inclination of the road **20.** All three graphs are shown with aligned horizontal axes. As seen in the bottom graph, a first trailing vehicle **30a** and a second trailing vehicle **30b** are trailing the vehicle **10.** The vehicle **10** is, at a first road segment **25** of the road **20.**

At a first point in time **T1** during the first road segment **25,** a speed limit **236** (dashed line in top graph of **FIG. 4****)** of the road **20** increases. At a second point in time **T2,** at a first upcoming road segment **21** following the current road segment **25,** the slope **212** of the road **20** decreases. At a third point in time **T3,** at a second upcoming road segment **22** following the first upcoming road segment **21,** the slope **212** of the road **20** increases. That is to say, at the second point in time **T2** the vehicle **10** enters a downhill segment of the road **20** and at the third point in time **T3,** the vehicle **10** reaches a valley. In the top graph, the dotted line shows a conventional speed **242'** indicating how the speed of a conventional vehicle would change in the scenario of **FIG. 4****.** The conventional vehicle would, in response to the increase in speed limit **236,** start to accelerate, and accelerate until the conventional vehicle reaches the speed limit **236.** At, or sufficiently ahead of the first point in time **T1,** the vehicle **10** of the present disclosure will obtain (or try to obtain) propulsion modes **33** of the trailing vehicles **30a, 30b.** This may be accomplished according to any example or feature described herein. To this end, the vehicle **10** of the present disclosure will, responsive to all trailing vehicles **30a, 30b** within the predetermined range **222** operating in a propulsion mode **33** corresponding to the topography fuel efficiency mode, wait with acceleration until the second point in time **T2** when the downhill road segment is reached. This causes the speed **242** of the vehicle to remain below the speed limit **236** of the road **20** for the duration of the current road segment **25** allowing the vehicle **10** to utilize the topology of the road **20** to accelerate to the speed limit **236** at the first upcoming road segment **21.**

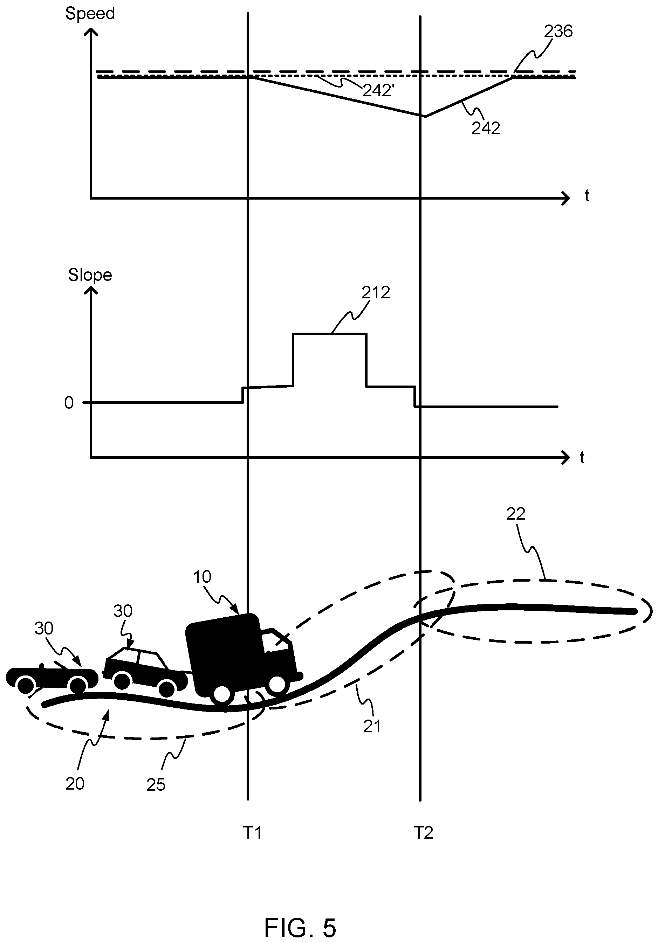

With reference to **FIG. 5****,** another specific example of how the features of the present disclosure may be utilized will be explained. In **FIG. 5****,** a vehicle **10** is traveling along a road **20.** The top graph in **FIG. 5** shows a speed **242** of the vehicle **10** versus time and the middle graph shows a slope **212** of the road **20.** The bottom graph schematically shows the vehicle **10** traveling along the road **20** and an inclination of the road **20.** All three graphs are shown with aligned horizontal axes. As seen in the bottom graph, a first trailing vehicle **30a** and a second trailing vehicle **30b** are trailing the vehicle **10.** The vehicle **10** is, at a first road segment **25** of the road **20.**

At a first point in time **T1,** at a first upcoming road segment **21** following the current road segment **25,** the slope **212** of the road **20** increases. At a second point in time **T2,** at a second upcoming road segment **22** following the first upcoming road segment **21,** the slope **212** of the road **20** decreases. That is to say, at the first point in time **T1** the vehicle **10** enters an uphill segment of the road **20** and at the second point in time **T2,** the vehicle **10** reaches a crest. In the top graph, the dotted line shows a prior art speed **242'** indicating how the speed of a prior art vehicle would change in the scenario of **FIG. 5****.** The prior art vehicle would maintain its speed through the uphill segment. At, or sufficiently ahead of the first point in time **T1,** the vehicle **10** of the present disclosure will obtain (or try to obtain) propulsion modes **33** of the trailing vehicles **30a, 30b.** This may be accomplished according to any example or feature described herein. To this end, the vehicle **10** will, responsive to all trailing vehicles **30a, 30b** within the predetermined range **222** operating in a propulsion mode **33** corresponding to the topography fuel efficiency mode, permit the current speed **242** of the vehicle **10** to temporarily deviate below the target speed range **232.** This causes the speed **242** of the vehicle to deviate below the speed limit **236** of the road **20** for the duration of the uphill road segment **21** and then accelerating back to the speed limit **236** at the second point in time **T2.**

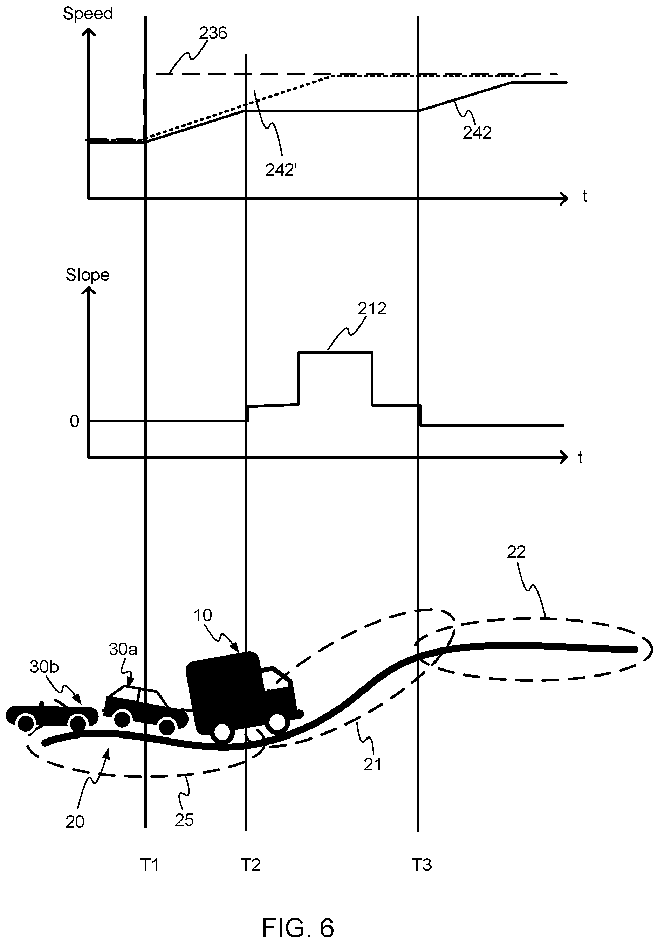

With reference to **FIG. 6****,** yet another specific example of how the features of the present disclosure may be utilized will be explained. In **FIG. 6** a vehicle **10** is traveling along a road **20.** The top graph in **FIG. 6** shows a speed **242** of the vehicle **10** versus time and the middle graph shows a slope **212** of the road **20**. The bottom graph schematically shows the vehicle **10** traveling along the road **20** and an inclination of the road **20.** All three graphs are shown with aligned horizontal axes. As seen in the bottom graph, a first trailing vehicle **30a** and a second trailing vehicle **30b** are trailing the vehicle **10.** The vehicle **10** is, at a first road segment **25** of the road **20.**

At a first point in time **T1** during the first road segment **25,** a speed limit **236** (dashed line in top graph of **FIG. 6****)** of the road **20** increases. At a second point in time **T2,** at a first upcoming road segment **21** following the current road segment **25,** the slope **212** of the road **20** increases. At a third point in time **T3,** at a second upcoming road segment **22** following the first upcoming road segment **21,** the slope **212** of the road **20** decreases. That is to say, at the second point in time **T2** the vehicle **10** enters an uphill segment of the road **20** and at the third point in time **T3,** the vehicle **10** reaches a crest. In the top graph, the dotted line shows a prior art speed **242'** indicating how the speed of a prior art vehicle would change in the scenario of **FIG. 6****.** The prior art vehicle would, in response to the increase in speed limit **236,** start to accelerate, and keep accelerating until the prior art vehicle reaches the speed limit **236.** The prior art vehicle would accelerate through the uphill segment of the road **20.** Correspondingly, also the vehicle **10** of the present disclosure may start to accelerate at the first point in time **T1.** At, or sufficiently ahead of the second point in time **T2,** the vehicle **10** of the present disclosure will obtain (or try to obtain) propulsion modes **33** of the trailing vehicles **30a, 30b.** This may be accomplished according to any example or feature described herein. To this end, the vehicle **10** of the present disclosure will, responsive to all trailing vehicles **30a, 30b** within the predetermined range **222** operating in a propulsion mode **33** corresponding to the topography fuel efficiency mode, pause the acceleration until the third point in time **T3** when the crest is reached. This causes the speed **242** of the vehicle to remain constantly below the speed limit **236** of the road **20** for the duration of the uphill segment allowing the vehicle **10** to accelerate to the speed limit **236** at the second upcoming road segment **22** where acceleration is more fuel efficient.

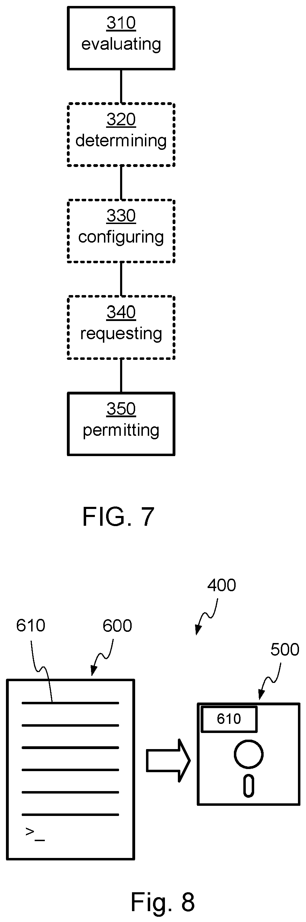

With reference to **FIG. 7****,** a method **300** will be presented. The method **300** shown in **FIG. 7** may be expanded and/or modified to comprise any suitable feature or function presented herein although not specifically mentioned in reference to **FIG. 7****.** For instance, the method **300** may comprise all or some of the actions described with reference to **FIG. 3A****,** **FIG. 4****,** **FIG. 5****,** and/or **FIG. 6****.** The method **300** may be a computer implemented method and may be performed by the processing circuitry **110** of the computer system **100.**

The method **300** comprises evaluating **310,** based on topography data **27** of an upcoming road segment **21, 22,** use of upcoming topography to achieve the target speed range **232** of a vehicle **10** operating in the topography fuel efficiency mode. The method **300** further comprises, determining **320** that all trailing vehicles within a predetermined range **222** are operating in a propulsion mode **33** corresponding to the topography fuel efficiency mode. Further, responsive to determining that all trailing vehicles **30** within the predetermined range **222** are operating in a propulsion mode **33** corresponding to the topography fuel efficiency mode, permitting **350** the current speed **242** of the vehicle **10** to temporarily deviate below the target speed range **232** of the vehicle **10** and to use the upcoming topography to achieve the target speed **232.**

In some examples, the method **300** may further comprise configuring **330** the configurable speed deviation **234** according to any example or function presented herein.

In some examples, the method **300** may further comprises requesting **340** an indication of a propulsion mode **33** of the trailing vehicle **30** according to any example or function presented herein.

As with all other features, functions and examples presented herein, the method **300** may be performed in any suitable order.

In **FIG. 8** a computer program product **400** is shown. The computer program product **400** comprises a computer program **600** and a non-transitory computer readable medium **500.** The computer program **600** may be stored on the computer readable medium **500.** The computer readable medium **500** is, in **FIG. 8****,** exemplified as a vintage 5,25" floppy disc, but may be embodied as any suitable non-transitory computer readable medium such as, but not limited to, hard disk drives (HDDs), solid-state drives (SSDs), optical discs (e.g., CD-ROM, DVD-ROM, CD-RW, DVD-RW), USB flash drives, magnetic tapes, memory cards, Read-Only Memories (ROM), network-attached storage (NAS), cloud storage etc.

The computer program **600** comprises instruction **610** e.g. program instruction, software code, that, when executed by processing circuitry cause the processing circuitry to perform the method **300** described herein with reference to **FIG. 7****.**

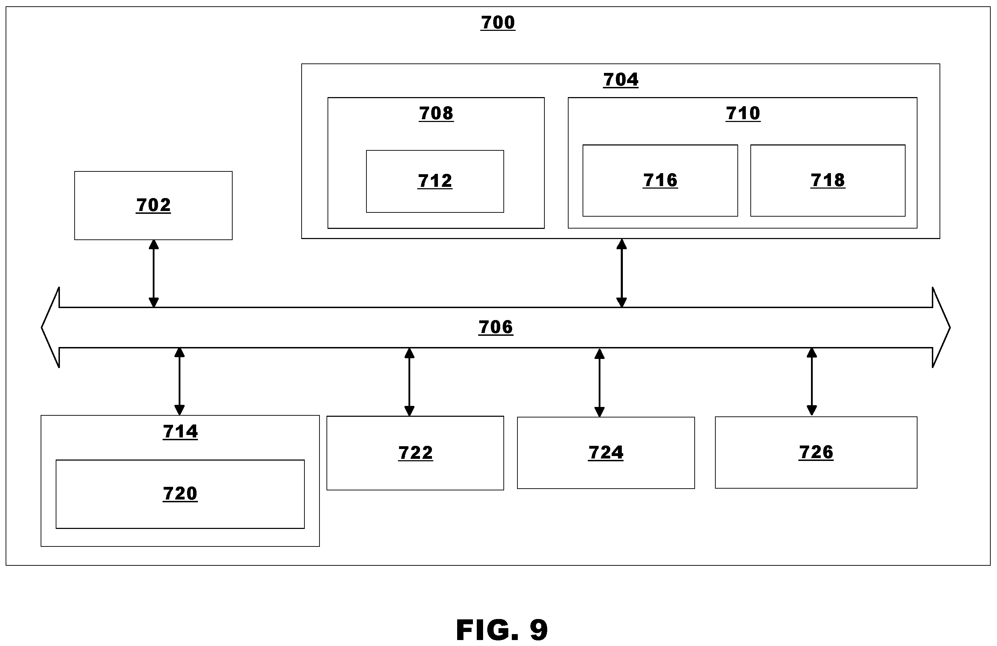

**FIG. 9** is a schematic diagram of a computer system **700** for implementing examples disclosed herein. The computer system **700** of **FIG. 9** may be the computer system **100** introduced with reference to **FIG. 1A****.** The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The processing circuitry **702 in** **FIG. 9** may be the processing circuitry **110** introduced with reference to **FIG. 1B****.** The memory **706 in** **FIG. 9** may be the storage device **120** introduced with reference to **FIG. 1B****.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The invention of the present disclosure is defined by the independent claims. Preferred embodiments are defined by the dependent claims.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

## Claims

1. A computer system (100) comprising processing circuitry (110) configured to:
evaluate, based on topography data (27) of an upcoming road segment (21, 22), use of upcoming topography to achieve a target speed range (232) of a vehicle (10) operating in a topography fuel efficiency mode;
**characterized by** the processing circuitry (110) being configured to:
determine all trailing vehicles within a predetermined range (222) are operating in a propulsion mode (33) corresponding to the topography fuel efficiency mode; and
responsive to determining that all trailing vehicles (30) within the predetermined range (222) are operating in the propulsion mode (33) corresponding to the topography fuel efficiency mode:
permit a current speed (242) of the vehicle (10) to temporarily deviate below the target speed range (232) of the vehicle (10) and to use the upcoming topography to achieve the target speed range (232).

2. The computer system (100) of claim 1, wherein the target speed range (232) of the vehicle (10) comprises a speed limit (236) of a current road segment (25).

3. The computer system of claim 1 or 2, wherein the processing circuitry (110) is further configured to:
permit the current speed (242) of the vehicle (10) to deviate below the target speed range (232) of the vehicle (10) by a configurable speed deviation (234).

4. The computer system (100) of claim 3, wherein the processing circuitry (110) is further configured to:
responsive to the topography data (27) indicating a change in slope (212) of the upcoming road segment (21, 22), configure the configurable speed deviation (234) based on a travel time estimate for the vehicle (10) to reach the road segment associated with the change in slope (212) indicated by the topography data (27).

5. The computer system (100) of claim 3 or 4, wherein the processing circuitry (110) is further configured to:
configure the configurable speed deviation (234) based on a geographical location of the vehicle (10).

6. The computer system (100) of any one of claims 3-5, wherein the processing circuitry (110) is further configured to:
configure the configurable speed deviation (234) based on additional vehicle data (19), additional trailing vehicle data (39) and/or environment data (79).

7. The computer system (100) of any one of claims 1-6, wherein the predetermined range (222) is a time gap or a distance.

8. The computer system (100) of any one of claims 1-7, wherein the processing circuitry (110) is configured to, for each of the trailing vehicles (30):
request the propulsion mode (33) of the trailing vehicle (30), and
responsive to the associated request timing out, determine that the trailing vehicle (30) is not operating in a mode corresponding to the topography fuel efficiency mode.

9. The computer system (100) of claim 8, wherein the request the propulsion mode (33) is provided across a vehicle-to-vehicle communications interface (210).

10. The computer system (100) of any one of claims 3-9, wherein the processing circuitry (110) is further configured to:
obtain speed limit data of the current road segment (25); and
configure the configurable speed deviation (234) based on the speed limit data.

11. The computer system (100) of claim 1, wherein the target speed range (232) of the vehicle (10) is a range comprising a speed limit (236) of a current road segment (25); the processing circuitry (110) is further configured to: permit the current speed (242) of the vehicle (10) to deviate below the target speed range (232) of the vehicle (10) by a configurable speed deviation (234); the processing circuitry (110) is further configured to: responsive to the topography data (27) indicating a change in slope (212) of the upcoming road segment (21, 22), configure the configurable speed deviation (234) based on an estimate a travel time for the vehicle (10) to reach the road segment associated with the change in slope (212) indicated by the topography data (27); the processing circuitry (110) is further configured to: configure the configurable speed deviation (234) based on a geographical location of the vehicle (10); the processing circuitry (110) is further configured to: configure the configurable speed deviation (234) based on additional vehicle data (19), additional trailing vehicle data (39) and/or environment data (79); the predetermined range (222) is a time gap or a distance; the processing circuitry (110) is configured to, for each of the trailing vehicles (30): request the propulsion mode (33) of the trailing vehicle (30), and responsive to the associated request timing out, determine that the trailing vehicle (30) is not operating in a mode corresponding to the topography fuel efficiency mode; the request for the propulsion mode (33) is provided across a vehicle-to-vehicle communications interface (210); the vehicle-to-vehicle communications interface (210) is a direct interface between at least the vehicle (10) and one of the one or more trailing vehicles (30) or the vehicle-to-vehicle communications interface (210) is a cloud interface; and the processing circuitry (110) is further configured to: obtain speed limit data of the current road segment (25); and configure the configurable speed deviation (234) based on the speed limit data.

12. A vehicle (10) comprising the computer system (100) of any one of claims 1-11.

13. A computer-implemented method (300) comprising:
evaluating (310), by a processing circuitry (110) of a computer system (100), based on topography data (27) of an upcoming road segment (21, 22), use of upcoming topography to achieve a target speed range (232) of a vehicle (10) operating in a topography fuel efficiency mode;
**characterized by** determining (320) all trailing vehicles within a predetermined range (222) are operating in a propulsion mode (33) corresponding to the topography fuel efficiency mode;
responsive to determining that all trailing vehicles (30) within a predetermined range (222) are operating in a propulsion mode (33) corresponding to the topography fuel efficiency mode:
permitting (350), by the processing circuitry (110) of the computer system (100), a current speed (242) of the vehicle (10) to temporarily deviate below the target speed range (232) of the vehicle (10) and to use the upcoming topography to achieve the target speed (232).

14. A computer program product (600) comprising program code (610) for performing, when executed by the processing circuitry (110), the method (300) of claim 13.

15. A non-transitory computer-readable storage medium (500) comprising instructions (510), which when executed by the processing circuitry (110), cause the processing circuitry (110) to perform the method (300) of claim 13.

## Patentansprüche

1. Computersystem (100), umfassend eine Verarbeitungsschaltung (110) die zu Folgendem konfiguriert ist:
Bewerten, basierend auf Topographiedaten (27) eines vorausliegenden Straßenabschnitts (21, 22), einer Verwendung der vorausliegenden Topographie, um einen Zielgeschwindigkeitsbereich (232) eines Fahrzeugs (10) zu erreichen, das in einem Topographie-Kraftstoffeffizienzmodus betrieben wird;
**dadurch gekennzeichnet, dass** die Verarbeitungsschaltung (110) zu Folgendem konfiguriert ist:
Bestimmen, dass alle nachfolgenden Fahrzeuge innerhalb eines vorbestimmten Bereichs (222) in einem Antriebsmodus (33) betrieben werden, der dem Topographie-Kraftstoffeffizienzmodus entspricht; und als Reaktion auf ein Bestimmen, dass alle nachfolgenden Fahrzeuge (30) innerhalb des vorbestimmten Bereichs (222) in dem Antriebsmodus (33) betrieben werden, der dem Topographie-Kraftstoffeffizienzmodus entspricht:
Zulassen, dass eine aktuelle Geschwindigkeit (242) des Fahrzeugs (10) vorübergehend unterhalb den Zielgeschwindigkeitsbereichs (232) des Fahrzeugs (10) abweicht und die vorausliegende Topographie nutz, um den Zielgeschwindigkeitsbereich (232) zu erreichen.

2. Computersystem (100) nach Anspruch 1, wobei der Zielgeschwindigkeitsbereich (232) des Fahrzeugs (10) eine Geschwindigkeitsbegrenzung (236) eines aktuellen Straßenabschnitts (25) umfasst.

3. Computersystem nach Anspruch 1 oder 2, wobei die Verarbeitungsschaltung (110) ferner zu Folgendem konfiguriert ist:
Zulassen, dass die aktuelle Geschwindigkeit (242) des Fahrzeugs (10) um eine konfigurierbare Geschwindigkeitsabweichung (234) unterhalb des
Zielgeschwindigkeitsbereichs (232) des Fahrzeugs (10) abweicht.

4. Computersystem (100) nach Anspruch 3, wobei die Verarbeitungsschaltung (110) ferner zu Folgendem konfiguriert ist:
als Reaktion auf die Topographiedaten (27), die eine Änderung der Neigung (212) des vorausliegenden Straßenabschnitts (21, 22) angeben, Konfigurieren der konfigurierbaren Geschwindigkeitsabweichung (234) basierend auf einer Fahrzeitschätzung für das Fahrzeug (10), um den Straßenabschnitt zu erreichen, der mit der Änderung der Neigung (212) assoziiert ist, die durch die Topographiedaten (27) angegeben wird.

5. Computersystem (100) nach Anspruch 3 oder 4, wobei die Verarbeitungsschaltung (110) ferner zu Folgendem konfiguriert ist:
Konfigurieren der konfigurierbaren Geschwindigkeitsabweichung (234) basierend auf einer geografischen Position des Fahrzeugs (10).

6. Computersystem (100) nach einem der Ansprüche 3-5, wobei die Verarbeitungsschaltung (110) ferner zu Folgendem konfiguriert ist:
Konfigurieren der konfigurierbaren Geschwindigkeitsabweichung (234) basierend auf zusätzlichen Fahrzeugdaten (19), zusätzlichen Schleppfahrzeugdaten (39) und/oder Umgebungsdaten (79).

7. Computersystem (100) nach einem der Ansprüche 1 bis 6, wobei der vorbestimmte Bereich (222) eine Zeitspanne oder eine Entfernung ist.

8. Computersystem (100) nach einem der Ansprüche 1-7, wobei die Verarbeitungsschaltung (110) für jedes der nachfolgenden Fahrzeuge (30) zu Folgendem konfiguriert ist:
Anfordern des Antriebsmodus (33) des Schleppfahrzeugs (30) und als Reaktion auf die Zeitüberschreitung der assoziierten Anforderung, Bestimmen, dass das Schleppfahrzeug (30) nicht in einem Modus betrieben wird, der dem Topographie-Kraftstoffeffizienzmodus entspricht.

9. Computersystem (100) nach Anspruch 8, wobei die Anforderung des Antriebsmodus (33) über eine Fahrzeug/Fahrzeug-Kommunikationsschnittstelle (210) bereitgestellt wird.

10. Computersystem (100) nach einem der Ansprüche 3-9, wobei die Verarbeitungsschaltung (110) ferner zu Folgendem konfiguriert ist:
Erlangen von Geschwindigkeitsbegrenzungsdaten des aktuellen Straßenabschnitts (25); und Konfigurieren der konfigurierbaren Geschwindigkeitsabweichung (234) basierend auf den Geschwindigkeitsbegrenzungsdaten.

11. Computersystem (100) nach Anspruch 1, wobei der Zielgeschwindigkeitsbereich (232) des Fahrzeugs (10) ein Bereich ist, der eine Geschwindigkeitsgrenze (236) eines aktuellen Straßensegments (25) umfasst; die Verarbeitungsschaltung (110) ferner zu Folgendem konfiguriert ist: Zulassen, dass die aktuelle Geschwindigkeit (242) des Fahrzeugs (10) um eine konfigurierbare Geschwindigkeitsabweichung (234) unterhalb des Zielgeschwindigkeitsbereichs (232) des Fahrzeugs (10) abweicht; die Verarbeitungsschaltung (110) ferner zu Folgendem konfiguriert ist:
als Reaktion auf die Topographiedaten (27), die eine Änderung der Neigung (212) des vorausliegenden Straßenabschnitts (21, 22) angeben, Konfigurieren der konfigurierbaren Geschwindigkeitsabweichung (234) basierend auf einer Schätzung einer Fahrzeit für das Fahrzeug (10), um den Straßenabschnitt zu erreichen, der mit der Änderung der Neigung (212) assoziiert ist, die durch die Topographiedaten (27) angegeben wird; wobei die Verarbeitungsschaltung (110) ferner zu Folgendem konfiguriert ist: Konfigurieren der konfigurierbaren Geschwindigkeitsabweichung (234) basierend auf einer geografischen Position des Fahrzeugs (10); wobei die Verarbeitungsschaltung (110) ferner zu Folgendem konfiguriert ist: Konfigurieren der konfigurierbaren Geschwindigkeitsabweichung (234) basierend auf zusätzlichen Fahrzeugdaten (19), zusätzlichen Schleppfahrzeugdaten (39) und/oder Umgebungsdaten (79); wobei der vorbestimmte Bereich (222) eine Zeitspanne oder eine Entfernung ist; die Verarbeitungsschaltung (110) konfiguriert ist, um für jedes der hinteren Fahrzeuge (30): den Antriebsmodus (33) des hinteren Fahrzeugs (30) anzufordern, und als Reaktion auf die assoziierte Anforderungszeitüberschreitung, Bestimmen, dass das hintere Fahrzeug (30) nicht in einem Modus betrieben wird, der dem Topographie-Kraftstoffeffizienzmodus entspricht; die Anforderung des Antriebsmodus (33) über eine Fahrzeug/Fahrzeug-Kommunikationsschnittstelle (210) bereitgestellt wird; die Fahrzeug/Fahrzeug-Kommunikationsschnittstelle (210) eine direkte Schnittstelle zwischen mindestens dem Fahrzeug (10) und einem von dem einen oder den mehreren Folgefahrzeugen (30) ist, oder die Fahrzeug/Fahrzeug-Kommunikationsschnittstelle (210) eine Cloud-Schnittstelle ist; und die Verarbeitungsschaltung (110) ferner zu Folgendem konfiguriert ist: Erlangen von Geschwindigkeitsbegrenzungsdaten des aktuellen Straßenabschnitts (25); und Konfigurieren der konfigurierbaren Geschwindigkeitsabweichung (234) basierend auf den Geschwindigkeitsbegrenzungsdaten.

12. Fahrzeug (10), umfassend das Computersystem (100) nach einem der Ansprüche 1-11.

13. Computerimplementiertes Verfahren (300), umfassend:
Bewerten (310), durch eine Verarbeitungsschaltung (110) eines Computersystems (100), basierend auf Topographiedaten (27) eines vorausliegenden Straßenabschnitts (21, 22), einer Verwendung der vorausliegenden Topographie, um einen Zielgeschwindigkeitsbereich (232) eines Fahrzeugs (10) zu erreichen, das in einem Topographie-Kraftstoffeffizienzmodus betrieben wird;
**gekennzeichnet durch** Bestimmen (320), dass alle nachfolgenden Fahrzeuge innerhalb eines vorbestimmten Bereichs (222) in einem Antriebsmodus (33) betrieben werden, der dem Topographie-Kraftstoffeffizienzmodus entspricht;
als Reaktion auf ein Bestimmen, dass alle nachfolgenden Fahrzeuge (30) innerhalb eines vorbestimmten Bereichs (222) in einem Antriebsmodus (33) betrieben werden, der dem Topographie-Kraftstoffeffizienzmodus entspricht:
Zulassen (350), durch die Verarbeitungsschaltung (110) des Computersystems (100), dass eine aktuelle Geschwindigkeit (242) des Fahrzeugs (10) vorübergehend unterhalb des Zielgeschwindigkeitsbereichs (232) des Fahrzeugs (10) abweicht und die vorausliegende Topographie nutzt, um die Zielgeschwindigkeit (232) zu erreichen.

14. Computerprogrammprodukt (600), umfassend einen Programmcode (610), um das Verfahren (300) von Anspruch 13 durchzuführen, wenn er durch eine Verarbeitungsschaltung (110) ausgeführt wird.

15. Nicht-transitorisches, computerlesbares Speichermedium (500), umfassend Anweisungen (510), die, wenn sie von der Verarbeitungsschaltung (110) ausgeführt werden, die Verarbeitungsschaltung (110) veranlassen, das Verfahren (300) von Anspruch 13 durchzuführen.

## Revendications

1. Système informatique (100) comprenant un circuit de traitement (110) configuré pour :
évaluer, sur la base de données topographiques (27) d'un segment de route à venir (21, 22), l'utilisation de la topographie à venir pour atteindre une plage de vitesse cible (232) d'un véhicule (10) fonctionnant dans un mode d'efficacité énergétique lié à la topographie ;
**caractérisé en ce que** le circuit de traitement (110) est configuré pour :
déterminer que tous les véhicules de queue situés dans une plage prédéterminée (222) fonctionnent dans un mode de propulsion (33) correspondant au mode d'efficacité énergétique lié à la topographie ; et en réaction à la détermination que tous les véhicules de queue (30) situés dans la plage prédéterminée (222) fonctionnent dans le mode de propulsion (33) correspondant au mode d'efficacité énergétique lié à la topographie :
permettre à une vitesse actuelle (242) du véhicule (10) de s'écarter temporairement de la plage de vitesse cible (232) du véhicule (10) et d'utiliser la topographie à venir pour atteindre la plage de vitesse cible (232).

2. Système informatique (100) selon la revendication 1, dans lequel la plage de vitesse cible (232) du véhicule (10) comprend une limite de vitesse (236) d'un segment de route actuel (25).

3. Système informatique selon la revendication 1 ou 2, dans lequel le circuit de traitement (110) est en outre configuré pour :
permettre à la vitesse actuelle (242) du véhicule (10) de s'écarter de la plage de vitesse cible (232) du véhicule (10) d'un écart de vitesse configurable (234).

4. Système informatique (100) selon la revendication 3, dans lequel le circuit de traitement (110) est en outre configuré pour :
en réponse aux données topographiques (27) indiquant un changement de pente (212) du segment de route à venir (21, 22), configurer l'écart de vitesse configurable (234) sur la base d'une estimation du temps de trajet du véhicule (10) pour atteindre le segment de route associé au changement de pente (212) indiqué par les données topographiques (27).

5. Système informatique (100) selon la revendication 3 ou 4, dans lequel le circuit de traitement (110) est en outre configuré pour :
configurer l'écart de vitesse configurable (234) en fonction d'une localisation géographique du véhicule (10).

6. Système informatique (100) selon l'une quelconque des revendications 3 à 5, dans lequel le circuit de traitement (110) est en outre configuré pour :
configurer l'écart de vitesse configurable (234) en fonction de données supplémentaires relatives au véhicule (19), de données supplémentaires relatives au véhicule de queue (39) et/ou de données relatives à l'environnement (79).

7. Système informatique (100) selon l'une quelconque des revendications 1 à 6, dans lequel la plage prédéterminée (222) est un intervalle de temps ou une distance.

8. Système informatique (100) selon l'une quelconque des revendications 1 à 7, dans lequel le circuit de traitement (110) est configuré pour, pour chacun des véhicules de queue (30) :
demander le mode de propulsion (33) du véhicule de queue (30) et, en réponse à l'expiration de la demande associée, déterminer que le véhicule de queue (30) ne fonctionne pas dans un mode correspondant au mode d'efficacité énergétique lié à la topographie.

9. Système informatique (100) selon la revendication 8, dans lequel la demande du mode de propulsion (33) est fournie par l'intermédiaire d'une interface de communication de véhicule à véhicule (210).

10. Système informatique (100) selon l'une quelconque des revendications 3 à 9, dans lequel le circuit de traitement (110) est en outre configuré pour :
obtenir les données de limite de vitesse du segment de route actuel (25) ; et configurer l'écart de vitesse configurable (234) sur la base des données de limite de vitesse.

11. Système informatique (100) selon la revendication 1, dans lequel la plage de vitesse cible (232) du véhicule (10) est une plage comprenant une limite de vitesse (236) d'un segment de route actuel (25) ; le circuit de traitement (110) est en outre configuré pour : permettre à la vitesse actuelle (242) du véhicule (10) de s'écarter en dessous de la plage de vitesse cible (232) du véhicule (10) d'un écart de vitesse configurable (234) ; le circuit de traitement (110) est en outre configuré pour :
en réponse aux données topographiques (27) indiquant un changement de pente (212) du segment de route à venir (21, 22), configurer l'écart de vitesse configurable (234) sur la base d'une estimation d'un temps de trajet du véhicule (10) pour atteindre le segment de route associé au changement de pente (212) indiqué par les données topographiques (27) ; le circuit de traitement (110) est en outre configuré pour : configurer l'écart de vitesse configurable (234) sur la base d'une localisation géographique du véhicule (10) ; le circuit de traitement (110) est en outre configuré pour : configurer l'écart de vitesse configurable (234) en fonction de données supplémentaires du véhicule (19), de données supplémentaires du véhicule de queue (39) et/ou de données d'environnement (79) ; la plage prédéterminée (222) est un intervalle de temps ou une distance ; le circuit de traitement (110) est configuré pour, pour chacun des véhicules de queue (30) : demander le mode de propulsion (33) du véhicule de queue (30) et, en réponse à l'expiration de la demande associée, déterminer que le véhicule de queue (30) ne fonctionne pas dans un mode correspondant au mode d'efficacité énergétique lié à la topographie ; la demande du mode de propulsion (33) est fournie par l'intermédiaire d'une interface de communication de véhicule à véhicule (210) ; l'interface de communication de véhicule à véhicule (210) est une interface directe entre au moins le véhicule (10) et l'un des un ou plusieurs véhicules de queue (30) ou l'interface de communication de véhicule à véhicule (210) est une interface cloud ; et le circuit de traitement (110) est en outre configuré pour : obtenir des données de limite de vitesse du segment de route actuel (25) ; et configurer l'écart de vitesse configurable (234) sur la base des données de limite de vitesse.

12. Véhicule (10), comprenant le système informatique (100) selon l'une quelconque des revendications 1 à 11.

13. Procédé mis en œuvre par ordinateur (300) comprenant :
l'évaluation (310), par un circuit de traitement (110) d'un système informatique (100), sur la base des données topographiques (27) d'un segment de route à venir (21, 22), de l'utilisation de la topographie à venir pour atteindre une plage de vitesse cible (232) d'un véhicule (10) fonctionnant dans un mode d'efficacité énergétique lié à la topographie ;
**caractérisé par la** détermination (320) que tous les véhicules de queue situés dans une plage prédéterminée (222) fonctionnent dans un mode de propulsion (33) correspondant au mode d'efficacité énergétique lié à la topographie ;
en réponse à la détermination que tous les véhicules de queue (30) dans une plage prédéterminée (222) fonctionnent dans un mode de propulsion (33) correspondant au mode d'efficacité énergétique lié à la topographie :
l'autorisation (350), par le circuit de traitement (110) du système informatique (100), d'une vitesse actuelle (242) du véhicule (10) à s'écarter temporairement en dessous de la plage de vitesse cible (232) du véhicule (10) et à utiliser la topographie à venir pour atteindre la vitesse cible (232).

14. Produit de programme informatique (600) comprenant un code de programme (610) pour réaliser, lorsqu'il est exécuté par le circuit de traitement (110), le procédé (300) selon la revendication 13.

15. Support de stockage non transitoire lisible par ordinateur (500) comprenant des instructions (510) qui, lorsqu'elles sont exécutées par le circuit de traitement (110), amènent le circuit de traitement (110) à réaliser le procédé (300) selon la revendication 13.
